(19) Europäisches Patentamt
European Patent Office
Office européen des brevets

(11) **EP 3 772 806 A1**

(12) **EUROPEAN PATENT APPLICATION**

(43) Date of publication:
**10.02.2021 Bulletin 2021/06**

(21) Application number: **19250007.2**

(22) Date of filing: **05.08.2019**

(51) Int Cl.:
*H02M 3/07* (2006.01)  *H02M 3/337* (2006.01)
*H02M 1/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hamilton Sundstrand Corporation Charlotte, NC 28217 (US)**

(72) Inventor: **MCLEAN, Andrew Shirley, Solihull, B90 4SS (GB)**

(74) Representative: **Dehns St. Bride's House 10 Salisbury Square London EC4Y 8JD (GB)**

(54) **POWER CONVERTER**

(57)    A power supply circuit (200) comprises a push-pull portion (206) that includes a transformer (T1). First and second terminals of the primary winding are connected to ground via a first switch (Q1) and a second switch (Q2) respectively. The push-pull portion (206) generates an output voltage ($V_{out}$) across the secondary winding. An inductor (L1) is connected between an input voltage ($V_{in}$) and a centre tap on the primary winding of the transformer (T1) such that a boost voltage ($V_{boost}$) is applied to the centre tap. A two input charge pump (212) has its two inputs connected to the first and second terminals of the primary winding. The charge pump (212) generates a charging voltage ($V_{rect}$) at its output terminal that is greater than the boost voltage ($V_{boost}$). An energy storage portion (214) is connected to the output of the charge pump (212) and is arranged to supply a hold-up voltage ($V_{holdup}$) when the input voltage ($V_{in}$) is below a threshold value.

Fig. 3

EP 3 772 806 A1

# Description

Technical Field

This disclosure relates to a power supply circuit, in particular a power supply circuit suitable for aerospace and automotive electronic systems such as electric propulsion systems and/or air management systems.

Background Art

Power supplies used in aerospace/automotive electronic systems, such as embedded electronic systems, must adhere to stringent Radio Frequency Emissions industry standards. Typical industry standards that form the basis of requirements are DO-160G and CISPR25 for aerospace and automotive systems respectively.

These power supplies act to take a supply voltage, such as a 28 VDC supply in an aerospace environment, and convert it to one or more application voltages, which are typically much lower.

Power supplies used in mobile electronics may be subject to electrical transients, which can result in either significantly high input voltages or power source interruption. Full function and performance is required for a defined period during interruption of the input power source. For 28 VDC fed aerospace power supplies, 'Lightning Insulation' requirements dictate that isolated topologies are utilised.

A power supply system is often arranged such that a series-connected energy storage unit such as a capacitor is employed to provide 'hold-up' capability. Those skilled in the art will appreciate that 'hold-up' capability means that power is maintained for a defined period of time in the event that the input voltage drops below a tolerable level or cuts out altogether.

As will be appreciated by those skilled in the art, the energy that a capacitor stores increases significantly with increased voltage, in accordance with the square law relationship between these parameters, i.e.

$$E = \frac{1}{2}CV^2,$$

where E is the energy stored, C is the capacitance of the hold-up capacitor, and V is the voltage applied to the capacitor. As will also be appreciated by those skilled in the art, the ratio between the physical volume of the capacitor and the energy it stores is lower at high voltages compared with lower voltages, so generally the physical volume of the capacitor increases as the energy storage requirements increase.

In order to achieve the necessary energy storage capability, hold-up capacitors known in the art *per se* are typically charged to voltage levels slightly higher than the input voltage by a dedicated series-connected converter. Conventional power supply architectures are often arranged as series-connected converter stages with multiple Point Of Load (POL) converters. The hold-up capacitor is typically charged by an upstream converter, which creates an 'intermediate bus'.

The hold-up capacitor voltage magnitude generally influences the design of downstream converters, requiring them to operate from this higher intermediate bus voltage level for a significant percentage of on-time. Despite this, the magnitude of energy storage required often results in the use of capacitor technology susceptible to freezing at low temperatures and/or damage at low pressure/high altitude. This combination of challenging constraints can not only result in the non-optimal selection of converter discrete switch rating and transformer turns ratio, but also drive the use of electrolytic capacitors for the energy storage function. Consequently, this restricts the lower temperature and/or altitude at which energy function can be used. Such conventional arrangements also require significant mechanical support due to the associated volume and shape of the capacitor(s).

Summary of the Disclosure

In accordance with a first aspect, the present disclosure provides a power supply circuit comprising:

a push-pull portion comprising a transformer having a centre-tapped primary winding and a secondary winding, wherein a first terminal of the primary winding is connected to ground via a first switch, wherein a second terminal of the primary winding is connected to ground via a second switch, and wherein the push-pull portion is arranged to generate an output voltage across the secondary winding;
an inductor having a first terminal thereof connected to an input voltage, wherein a second terminal of the inductor is connected to a centre tap on the primary winding of the transformer such that a boost voltage is applied to said centre tap;
a charge pump having a first input terminal, a second input terminal, and an output terminal, wherein the first input terminal is connected to the first terminal of the primary winding, and wherein the second input terminal is connected to the second terminal of the primary winding, said charge pump being arranged to generate a charging voltage at its output terminal, said charging voltage being greater than the boost voltage; and
an energy storage portion connected to the output terminal of the charge pump, said energy storage portion being arranged to supply a hold-up voltage when the input voltage is below a threshold value.

Thus it will be appreciated by those skilled in the art that examples of the present disclosure provide an improved power supply circuit that provides a means for self-powered high voltage charging of a parallel-connected energy storage device to mitigate input voltage interruptions. The power supply circuit provided by the disclosure may advantageously avoid the use of dedicated power supply to charge the energy storage device.

Those skilled in the art will appreciate that examples of the present disclosure provide an arrangement that can advantageously charge the energy storage device to a much higher level without sacrificing main power converter device optimisation and provides a higher degree of freedom without adversely impacting converter efficiency, cost, weight, size and reliability. In addition, the charging voltage produced by the charge pump is intrinsically regulated, because it is a multiple of the boost voltage, which itself is regulated to a fixed multiple of the output voltage in accordance with the turns ratio. The 'output voltage' may be taken across the secondary winding of the transformer, either directly or via a dedicated output portion as discussed in further detail below in respect of some examples of the present disclosure.

The energy storage portion may, at least in some embodiments, comprise a capacitor. The circuit may also provide increased degrees of freedom regarding choice of capacitor technology for harsh application environments and may also provide optimisation of switch sizing and power converter turns ratio for normal operating conditions. As a greater voltage is provided, a smaller capacitance may be used, which may advantageously avoid the need for electrolytic capacitors, i.e. allowing the selection of non-electrolytic capacitors such as multi-layer ceramic capacitors or film capacitors. Thus in preferred examples, the energy storage portion comprises a non-electrolytic capacitor. In some such examples, the energy storage portion comprises a resistor connected in series with the capacitor. Such a resistor may advantageously provide for 'trickle charging' of the capacitor.

In some such embodiments, a first terminal of the capacitor is connected to the output terminal of the charge pump and a second terminal of the capacitor is connected to ground. In a set of such embodiments, the first terminal of the capacitor is connected to the first terminal of the inductor via a third switch. When hold-up functionality is required, the third switch may be controlled with an appropriate pulse width modulated (PWM) signal such that the capacitor discharges through the inductor, providing a hold-up voltage to 'take up the slack' for a fall in the input voltage.

When selecting specific active devices such as the first and second switches for use in the power supply circuit, the present disclosure may also advantageously allow for selection of devices that are optimised for 'normal' operation (i.e. when hold-up functionality is not required).

The value of the output voltage may be regulated by a controller which may be separate to the power supply circuit, but may be an integral part of the power supply circuit. Thus, in some examples, the power supply circuit further comprises a controller arranged to monitor the input voltage, to apply a first PWM signal to the first switch, and to apply a second PWM signal to the second switch, wherein said first and second PWM signals partially overlap. It will be appreciated that a PWM signal is a signal that alternates between an 'active' or 'mark' state (in which it closes a switch to which it is applied) and a 'space' state (in which it opens a switch to which it is applied). Whether the 'mark' and 'space' are a digital '1' or '0' depend on the type of switch in use and these are interchangeable with one another. For example, the switches may be 'active low' switches, which are closed when their respective control signal is low, i.e. the 'mark' of the control signal is '0', and the duty cycle is the proportion of a given cycle in which the appropriate control signal has the value '0'. Thus a feedback loop may provide for control of the PWM duty cycle so as to drive the output voltage to a desired regulated value which, in turn, intrinsically regulates the boost voltage and charging voltage.

Those skilled in the art will appreciate that the term 'partially overlapping' as used herein with respect to the first and second PWM signals means that there is a period in which both of the first and second PWM signals are in their mark state and that at least one of them is always on at any given time during regular operation, i.e. the first and second switches are never both open at the same time during regular operation of the device. Thus operation of the push-pull portion in accordance with such examples involves cycling through the following states: both the first and second switches are closed; the first switch is open and the second switch is closed; both the first and second switches are closed; the first switch is closed and the second switch is open. As will be appreciated by those skilled in the art, this operation cycle means that the power supply circuit in accordance with such examples is a 'current-fed' arrangement.

When both the first and second switches are closed (i.e. during the 'on-time'), both ends of the primary winding of the transformer are grounded and thus the primary winding is shorted, i.e. the primary winding has effectively zero inductance. As a result, the centre tap of the primary winding is, in effect, grounded. This advantageously provides a mechanism for grounding the centre tap of the primary winding to which the second terminal of the inductor is connected without the need for an additional switch to ground that node.

The term 'duty cycle' as used in relation to the transformer itself refers to the proportion of a given cycle in which both ends of its primary winding are shorted to ground, i.e. when the first and second PWM signals overlap.

In some examples, the controller comprises a PWM generator arranged to produce the first and second PWM signals. In some potentially overlapping examples, the power supply circuit further comprises an output voltage sense unit arranged to determine a magnitude of the output voltage and to supply said determined magnitude to the controller, wherein the controller compares the determined magnitude to a reference value and adjusts at least one of the first and second PWM signals based on a difference between the determined magnitude and the reference value. The controller may, in some examples, adjust both the first and second PWM signals. Such a voltage sense unit advantageously provides a mechanism to determine the value of the output voltage. The controller may adjust the duty cycle and/or frequency of the PWM signals as appropriate in order to drive the output voltage toward the target output voltage in a manner known in the art *per se*.

The output of the power supply circuit may be taken from the secondary winding of the transformer. In some examples, the secondary winding is connected to an output portion comprising first and second output terminals, wherein a first terminal of the secondary winding is connected to the first output terminal via a first forward bias output diode, a second terminal of the secondary winding is connected to the first output terminal via a second forward bias output diode, and wherein the second output terminal is connected to a centre tap of the secondary winding. In some such examples, a decoupling capacitor is connected between the first and second output terminals.

The output voltage may, in accordance with such examples, be taken across the first and second output terminals, where the first output terminal provides an output voltage rail and the second output terminal provides the output voltage return, i.e. effective ground for circuits connected to the output of the power supply circuit.

It will be appreciated that there are a number of charge pump topologies, known in the art per se, that could be used to implement the power supply circuit described hereinabove in accordance with this disclosure.

In some examples, the charge pump comprises a charge leg comprising a capacitor, a first diode, and a second diode, wherein:

an anode of the first diode is connected to the first terminal or the second terminal of the primary winding;
an anode of the second diode is connected to a cathode of the first diode and to a first terminal of the capacitor; and
a second terminal of the capacitor is connected to the other of the first and second terminals of the primary winding.

This charge leg may 'pump' the boost voltage to a higher value, i.e. to provide the charging voltage. A cathode of the second diode may, in some examples, provide the output terminal of the charge pump with the charging voltage directly. It has been appreciated, however, that the use of only a single charge leg asymmetrically that asymmetrically draws current from only one end of the primary winding may give rise to a larger ripple on the charging voltage supplied to the energy storage portion than would otherwise be desirable.

Accordingly, in an alternative set of examples, the charge pump comprises a charge pump cell comprising two such charge legs. Thus, in accordance with such examples, the charge pump comprises a charge pump cell including a first charge leg and a second charge leg, wherein:

the first charge leg comprises a first capacitor, a first diode, and a second diode; and
the second charge leg comprises a second capacitor, a third diode, and a fourth diode;
wherein the charge pump cell is arranged such that:

an anode of the first diode is connected to the first terminal of the primary winding;
an anode of the second diode is connected to a cathode of the first diode and to a first terminal of the first capacitor;
a second terminal of the first capacitor is connected to the second terminal of the primary winding;
an anode of the third diode is connected to the second terminal of the primary winding;
an anode of the fourth diode is connected to a cathode of the third diode and to a first terminal of the second capacitor; and
a second terminal of the second capacitor is connected to the first terminal of the primary winding.

Such examples provide a symmetrical 'cross-coupled' arrangement in which one leg draws current from one end of the primary winding and the other leg draws current from the other end of the primary winding. This charge pump cell thus operates such that during each operation cycle of the push-pull portion, during each approximate half-cycle, one of the first and second capacitors is charging while the other capacitor discharges so as to charge the energy storage portion.

The use of such a charge pump cell arrangement with a single charge pump cell (or a '2-level' charger, so-called due to each leg having two series diodes) results in a charging voltage that is approximately double the boost voltage.

However, stacking n such charge cells may result in an n-level charger, in which the charging voltage is approximately n times the boost voltage. Thus, in some alternative examples, the charge pump comprises at least first and second charge pump cells each including a respective first charge leg and a second charge leg, the charge pump further comprising a first output diode and a second output diode, wherein each first charge leg comprises a first capacitor and a first diode, and each second charge leg comprises a second capacitor and a second diode;
wherein each charge pump cell Is arranged such that:

a cathode of the first diode is connected to a first terminal of the first capacitor, and a cathode of the second diode is connected to a first terminal of the second capacitor;

a second terminal of the first capacitor is connected to an anode of the second diode, and a second terminal of the second capacitor is connected to an anode of the first diode;

wherein the charge pump is further arranged such that:

in a first charge pump cell, an anode of the first diode of said first charge pump cell is connected to the first terminal of the primary winding, and an anode of the second diode of said first charge pump cell is connected to the second terminal of the primary winding;

in a second charge pump cell, an anode of the first output diode is connected to the cathode of the first diode of said second charge pump cell, and an anode of the second output diode is connected to the cathode of the second diode of said second charge pump cell.

In some examples, the anode of the first diode of the second charge pump cell is connected to the cathode of the first diode of the first charge pump cell, and the anode of the second diode of the second charge pump cell is connected to the cathode of the second diode of the first charge pump cell. Thus it will be seen that this creates a 3-level charger, due to the three diodes in series in each 'leg' (the diode from each cell, plus the corresponding output diode). Such examples provide a charging voltage of approximately three times (i.e. triple) the boost voltage.

However, in some examples, the charge pump comprises one or more further charge pump cells being arranged in a stack such that in each of said further charge pump cells, the anode of the first diode of the respective further charge pump cell is connected to the cathode of the respective first diode of a different charge pump cell, and the anode of the respective second diode of the further charge pump cell is connected to the cathode of the respective second diode of the different charge pump cell. Thus, in such examples, these further charge pump cells are positioned between the first and second charge pump cells described above. Providing m further charge pump cells results in an $n = m + 3$ level charger, which will provide a charging voltage equal to n times the boost voltage.

It will be appreciated by those skilled in the art that the principles of the present invention may be applied to systems with any suitable input and output voltage requirements. However, in some examples, the input voltage is between 10 V and 50 V, preferably between 20 V and 40 V, preferably between 25 V and 30 V, and may, for example, be 28 V. In some potentially overlapping examples, the output voltage is between 1 V and 10 V, preferably between 2 V and 8 V, and may, for example, be 3 V or 5 V. In some other examples, the output voltage may be 18 V.

Brief Description of the Drawings

Certain examples of the present disclosure will now be described with reference to the accompanying drawings, in which:

Fig. 1 is block diagram of a prior art power supply circuit;
Fig. 2 is a block diagram of a power supply circuit in accordance with an example of the present disclosure;
Fig. 3 shows a circuit diagram of the power supply circuit of Fig. 2;
Fig. 4 is a circuit diagram providing a more detailed view of a 2-level charge pump arrangement;
Fig. 5 is a circuit diagram providing a more detailed view of a 3-level charge pump arrangement;
Figs. 6A and 6B are graphs that show typical waveforms associated with the 2-level charge pump arrangement of Fig. 4;
Figs. 7A and 7B are graphs that show typical waveforms associated with the 3-level charge pump arrangement of Fig. 5; and
Fig. 8 is a graph that shows typical operation of the power supply circuit 200 of Figs. 2 and 3.

Detailed Description

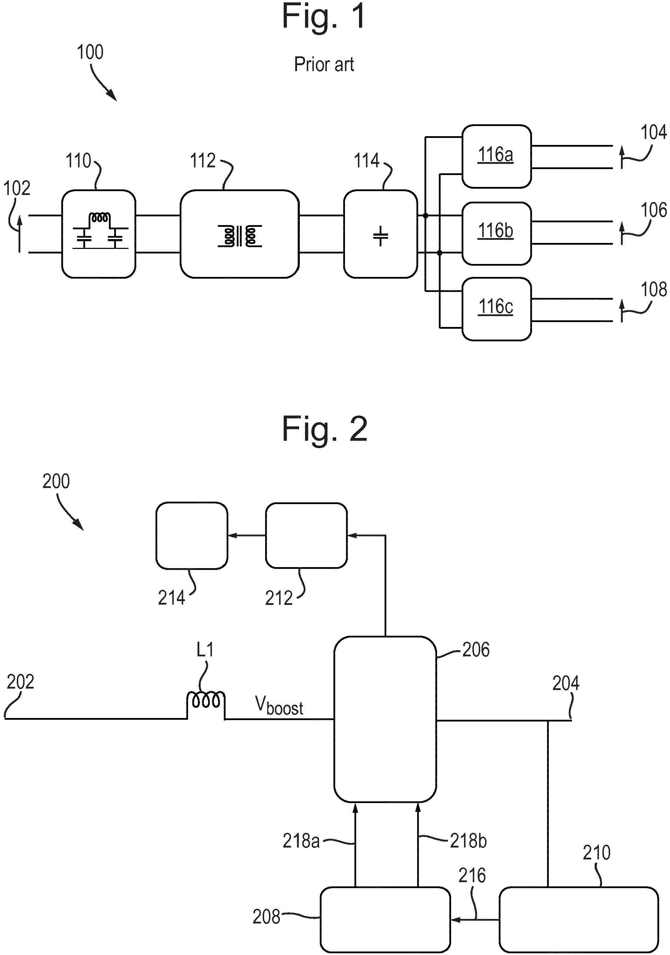

Fig. 1 is block diagram of a prior art power supply circuit 100 arranged to receive an input voltage 102 and produce a number of output voltages 104, 106, 108. In general, the circuit 100 may provide N output voltages, however only three are shown for ease of illustration

The power supply circuit 100 of Fig. 1 comprises an electromagnetic compatibility (EMC) filter 110, a flyback stage 112, series-connected energy storage 114, and a number of point of load (POL) converters 116a-c, one for each output voltage 104, 106, 108. The flyback stage 112 and POL converters 116a-c, in effect, provide a two-stage converter architecture in order to provide 'hold-up' capability, i.e. so that the circuit 100 can maintain the output voltages 104, 106, 108 at their required value, even if the input supply 102 drops low or to zero (i.e. in the case of a brownout, slump, or loss of power).

The flyback converters stage 112 and the POL converters 116a-c within the circuit 100 of Fig. 1 will make use of discontinuous input currents, which will typically give rise to unwanted interference that can have a detrimental effect on surrounding circuitry. Conducted Emissions requirements specify that this must be minimised, and so the EMC filter 110 is included at the power supply input (i.e. connected to the input supply 102) in order to satisfy the Conducted Emissions requirements arising from the large pulsating supply currents associated with the flyback stage 112 and POL converters 116a-c that are in use.

The series-connected energy storage 114 is, in practice, a capacitor which stores charge in one cycle of the circuit 100, and releases that charge in another cycle. Those skilled in the art will appreciate that the energy stored in a capacitor follows the characteristic equation

$$E = \frac{1}{2}CV^2,$$ where E is energy, C is capacitance, and V is the voltage across the capacitor. Accordingly, the output voltage of the flyback stage 112 is stepped up compared to its input voltage for storage on the capacitor. If the supply voltage 102 is lost or degraded, the capacitor (i.e. the energy storage 114) releases its stored energy, supplementing the loss of the supply voltage 102. Thus the capacitor of the energy storage portion 114 is, in effect, a 'hold-up' capacitor. Stepping up the voltage across the capacitor in this way has a significant impact on the amount of energy stored.

The first output voltage 104 is sensed by a feedback loop (not shown), which controls operation of the POL converters 116a-c so as to drive the first output voltage 104 to a desired set point. Typically this is achieved by controlling the duty cycle of signals applied to a buck stage converter within the POL converters 116a-c so as to discontinuously draw current from the input supply at a rate that leads to an output voltage of the desired magnitude. The hold-up capacitor 114 is typically charged by an upstream converter, which creates an 'intermediate bus'.

In order to achieve the necessary energy storage capability, the hold-up capacitor is typically charged to a voltage level slightly higher than the input voltage 102. The hold-up capacitor voltage magnitude generally influences the design of the downstream POL converters 116a-c, requiring them to operate from this higher intermediate bus voltage level for a significant percentage of on-time. In order to provide the desired magnitude of energy storage, the capacitor in the energy storage portion 114 is typically an electrolytic capacitor. However, electrolytic capacitors are susceptible to freezing at low temperatures and/or damage at low pressure/high altitude. These constraints may result in the non-optimal selection of switches in the POL converters 116a-c with respect to their switch ratings, and may also result in the non-optimal selection of the transformer turns ratio. Consequently, this restricts the lower temperature and/or altitude at which energy function can be used. Such conventional arrangements also require significant mechanical support due to the associated volume and shape of the electrolytic capacitor.

Fig. 2 is a block diagram of a power supply circuit 200 in accordance with an example of the present disclosure. The power supply circuit 200 of Fig. 2 is arranged to receive an input supply voltage 202 and produce an output voltage 204. By way of non-limiting example, the input supply voltage may be 28 VDC while the output voltage 204 may be 3 VDC or 5 VDC.

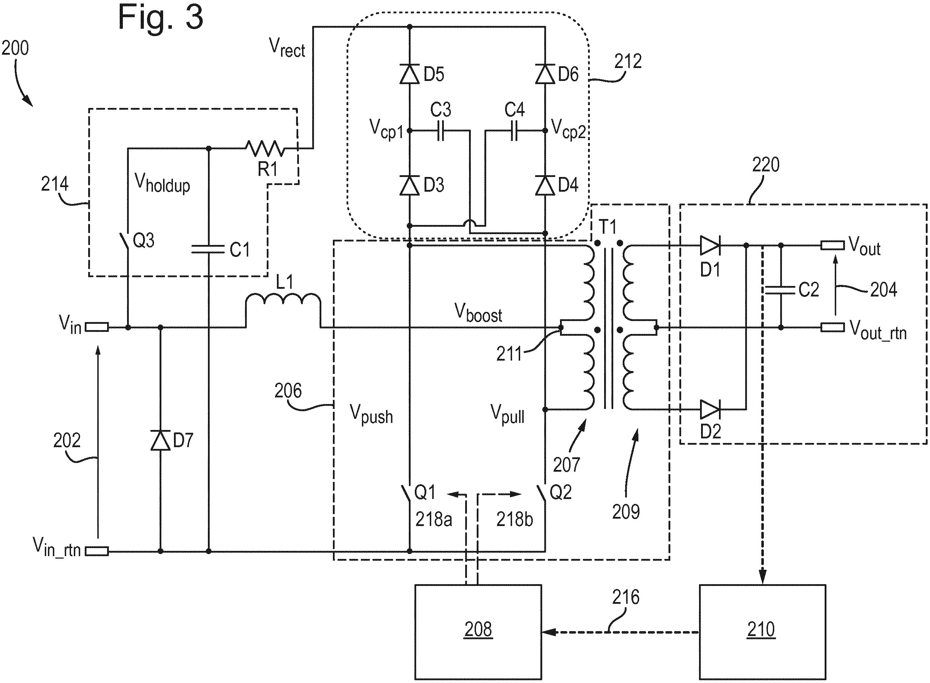

The power supply circuit 200 comprises: a current-fed push-pull power stage 206; a PWM controller 208; an output voltage sense unit 210; a charge pump 212; and a high voltage (HV) energy storage portion 214. The input voltage 202 is supplied to the push-pull portion 206 via an inductor L1, where a first 'input' terminal of the inductor L1 is connected to the input supply 202 and a second 'output' terminal of the inductor L1 is connected to the centre tap of a transformer within the push-pull portion as described in further detail with reference to Fig. 3.

The push-pull portion 206 acts to convert the voltage $V_{boost}$ at the output terminal of the inductor L1 to a desired value in order to provide the output voltage 204. During the off-time, energy from the push-pull portion 206 is 'fed back' through the energy storage portion 214 and stored across a hold-up capacitor, which stores this energy for use if the input voltage supply 202 drops below a tolerable limit, e.g. in the case of a power slump or outage.

The output voltage sense unit 210 senses the value of the output voltage 204 and sends a control signal 216 to the PWM controller 208. The PWM controller 208 sets the duty cycle of a pair of PWM control signals 218a, 218b, which are supplied to a pair of switches within the push-pull portion 206 as described in further detail with reference to Fig. 3. The value of the duty cycle of these PWM control signals 218a, 218b drives the output voltage 204 to a set point, in a manner known in the art *per se*.

Fig. 3 shows a circuit diagram of the power supply circuit 200 of Fig. 2. As outlined above and as can be seen in Fig. 3, the push-pull portion 206 comprises a transformer T1 having a primary winding 207 and a secondary winding 209, where the voltage $V_{boost}$ produced at the output terminal of the inductor L1 is supplied to the centre tap 211 of the primary winding 207 of the transformer T1.

Also shown in Fig. 3 is an output portion 220, connected across the secondary winding 209 of the transformer T1. The output portion 220 comprises first and second forward bias diodes D1, D2, and a capacitor C2. A first terminal (i.e. one end) of the first secondary winding 209 is connected to an output terminal that supplies the first output voltage $V_{out}$ via the first diode D1. The second terminal (i.e. the other end) of the first secondary winding 209 is connected to the output terminal that supplies the first output voltage $V_{out}$ via the second diode D2. The centre tap 211 of the first secondary winding 209 of the transformer T1 is connected to a further output that provides a first output voltage return $V_{out1\_rtn}$, i.e. ground for downstream circuitry arranged to receive the output voltage 204. The capacitor C2 acts as a decoupling capacitor between the two output terminals of the output portion 220.

A first terminal (i.e. one end) of the primary winding 207 is connected to the input voltage return terminal $V_{in\_rtn}$, via a first switch Q1. A second terminal (i.e. the other end) of the primary winding 207 is connected to ground via a second switch Q2. The terminals of the primary winding 207 are also connected to the energy storage portion 214 via the charge pump 212, as described further below.

The energy storage portion 214 comprises a capacitor C1 and a fixed resistor R1. The terminals of the primary winding 207 of the transformer 234 are each connected to a first terminal of the resistor R1 via the charge pump 212. The second terminal of the resistor R1 is connected to a first terminal of the capacitor C1, while the second terminal of the capacitor C1 is connected to the input voltage return terminal Vin_rtn, i.e. ground. The second terminal of the resistor R1 and the first terminal of the capacitor C1 are also connected to the first terminal of the inductor L1 via a third switch Q3.

The two switches Q1, Q2 connected to the primary winding 207 of the transformer T1 within the push-pull portion 206 are controlled by the PWM controller 208 which, as described above, varies the duty cycle of the partially overlapping PWM signals 218a, 218b applied to these switches Q1, Q2 in accordance with a control signal 216 supplied by the output voltage sense unit 210 which depends on a difference between the value of the output voltage 204 and a set point.

During 'normal' operation, the third switch Q3 remains open, such that the hold-up capacitor C1 cannot discharge through the inductor L1 (or to the input voltage 202, which would typically be protected by a diode, not shown). However, when the input voltage 202 drops below a threshold, Q3 is controlled with a PWM signal such that the hold-up capacitor C1 supplies power through Q3 and L1 to the centre tap 211 of the primary winding 207 of the transformer T1, thus maintaining $V_{boost}$ even when the input voltage 202 drops. Due to the back-EMF from the inductor L1, a flywheel diode D7 acts as a buck diode during the hold-up mode while Q3 is under PWM control.

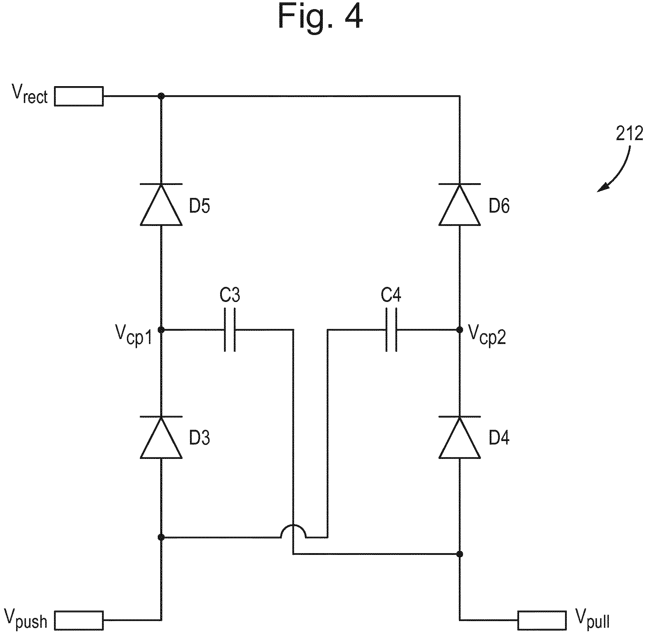

The charge pump 212 'amplifies' the voltage $V_{boost}$ at the output of the inductor L1 and generates a rectified voltage $V_{rect}$ that is supplied to the hold-up capacitor C1 via the resistor R1. There are many two-input charge pump arrangements known in the art *per se* that could be used to implement the charge pump 212 of the power supply circuit 200 in Fig. 3, however in the example described, a '2-level charger' is used, as will be described in more detail with reference to Fig. 4.

Fig. 4 is a circuit diagram providing a more detailed view of a 2-level charge pump arrangement which may be used as the charge pump 212 in the power supply circuit of Fig. 2.

The charge pump 212 comprises a charge pump cell including a first charge leg and a second charge leg constructed from two capacitors C3, C4 and four diodes D3-D6. The first charge leg comprises capacitor C3 and two diodes D3, D5 while the second charge leg comprises capacitor C4 and the other two diodes D4, D6.

The first leg of the charge pump 212 is arranged such that the anode of the diode D3 is connected to the first terminal of the primary winding 207 and thus receives the push voltage $V_{push}$. The anode of the diode D5 is connected to the cathode of the diode D3 and to the first terminal of the capacitor C3, where a first charge pump voltage $V_{cp1}$ is taken at a node between these. The second terminal of the capacitor C3 is connected to the second terminal of the primary winding 207, and thus to the pull voltage $V_{pull}$.

Similarly, the second leg of the charge pump 212 is arranged such that the anode of the diode D4 is connected to the second terminal of the primary winding 207 and thus receives the pull voltage $V_{pull}$. The anode of the diode D6 is connected to the cathode of the diode D4 and to the first terminal of the capacitor C4, where a second charge pump voltage $V_{cp2}$ is taken at a node between these. Finally, the second terminal of the capacitor C4 is connected to the first terminal of the primary winding 207, and thus to the push voltage $V_{push}$.

The cathodes of the diodes D5, D6 at the end of each charge leg are connected to an output terminal that supplies the rectified voltage $V_{rect}$ to the energy storage portion 214 as outlined above. The value of $V_{rect}$ is approximately double the value of $V_{boost}$.

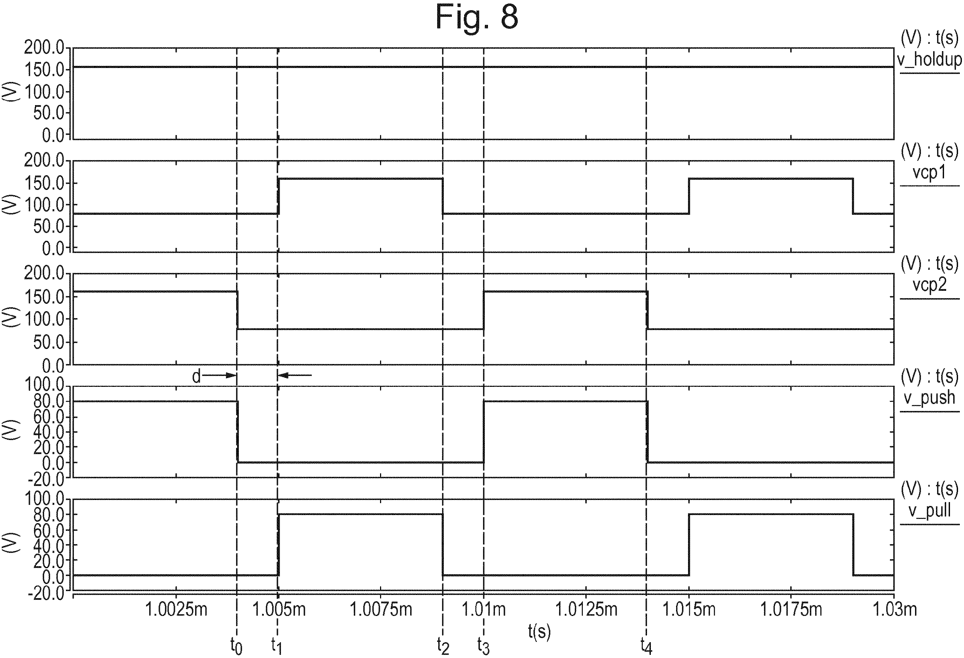

In general, the charge leg connected to the switch Q1, Q2 that is off while the other is on has its respective capacitor C3, C4 charging while the capacitor C3, C4 in the other charge leg discharges. When both of the switches Q1, Q2 in the push-pull portion 206 are on, the charge pump 212 provides no charging action. Full operation of the circuit 200 is described in further detail later with reference to Figs. 8A and 8B.

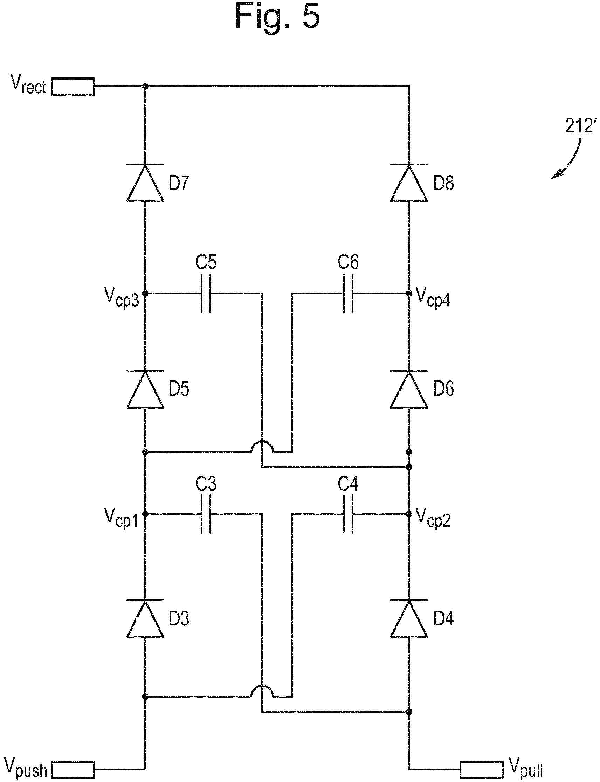

Fig. 5 is a circuit diagram providing a detailed view of a 3-level charge pump arrangement 212' which may be used as the charge pump in the power supply circuit of Fig. 2 instead of the charge pump 212 described above with reference to Fig. 4.

Construction of the 3-level charge pump arrangement 212' is similar to the 2-level charge pump arrangement 212 described above, however this arrangement 212' is constructed from four capacitors C3-C6 and six diodes D3-D8. The first charge leg comprises capacitors C3, C5 and three diodes D3, D5, D7 while the second charge leg comprises capacitors C4, C6 and the other three diodes D4, D6, D8.

The first leg of the charge pump 212' is arranged such that the anode of the diode D3 is connected to the first terminal of the primary winding 207 and thus receives the push voltage $V_{push}$. The anode of the diode D5 is connected to the cathode of the diode D3 and to the first terminal of the capacitor C3, where a first charge pump voltage $V_{cp1}$ is taken at a node between these. Similarly, the anode of the diode D7 is connected to the cathode of the diode D5 and to the first terminal of the capacitor C5, where a third charge pump voltage $V_{cp3}$ is taken at a node between these.

The second terminal of the capacitor C3 is connected to the second terminal of the primary winding 207, and thus to the pull voltage $V_{pull}$.

Similarly, the second leg of the charge pump 212 is arranged such that the anode of the diode D4 is connected to the second terminal of the primary winding 207 and thus receives the pull voltage $V_{pull}$. The anode

of the diode D6 is connected to the cathode of the diode D4 and to the first terminal of the capacitor C4, where a second charge pump voltage $V_{cp2}$ is taken at a node between these. Similarly, the anode of the diode D8 is connected to the cathode of the diode D6 and to the first terminal of the capacitor C6, where a fourth charge pump voltage $V_{cp4}$ is taken at a node between these.

Finally, the second terminal of the capacitor C4 is connected to the first terminal of the primary winding 207, and thus to the push voltage $V_{push}$.

The cathodes of the diodes D7, D8 at the end of each charge leg are connected to an output terminal which may supply the rectified voltage $V_{rect}$ to the energy storage portion 214 as outlined previously, however in this example the value of $V_{rect}$ is approximately triple the value of $V_{boost}$, rather than double as in the arrangement 212 of Fig. 4.

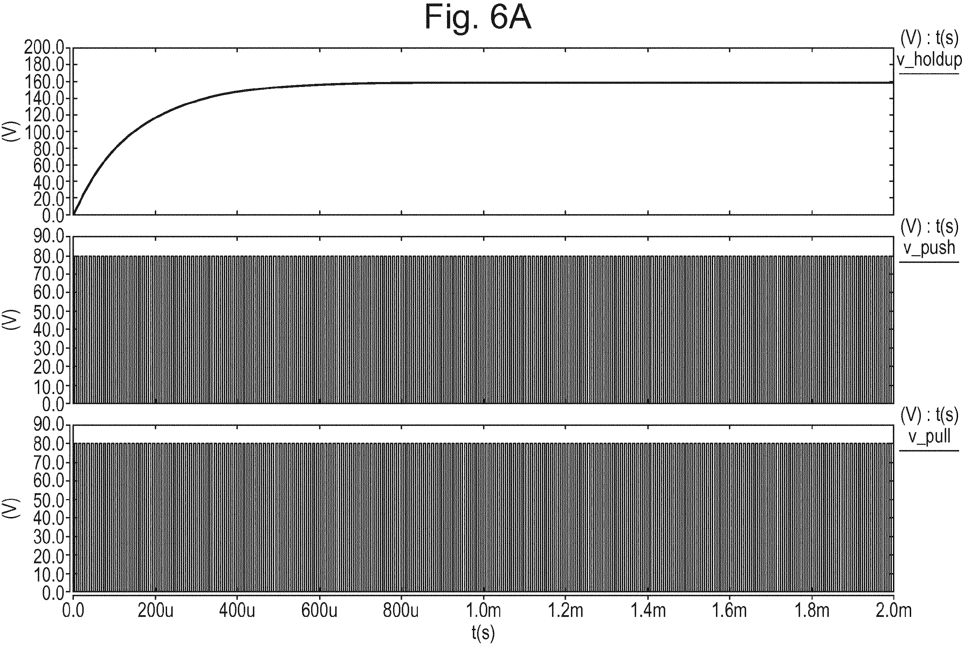

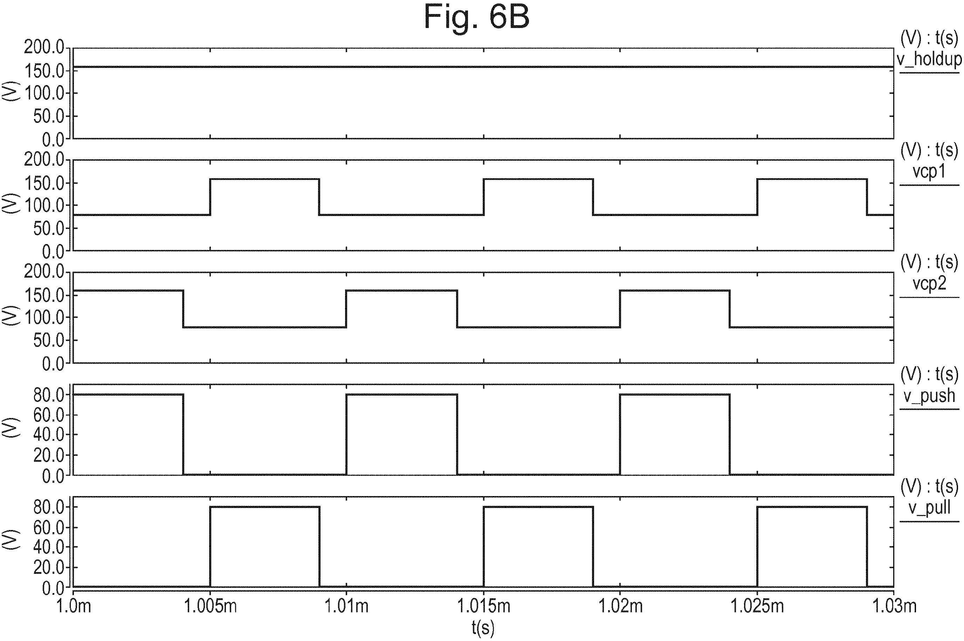

Figs. 6A and 6B are graphs that show typical waveforms associated with the 2-level charge pump arrangement 212 of Fig. 4. The hold-up voltage $V_{hold-up}$ applied to the hold-up capacitor C1 is derived from the output of the 2-level charge pump 212 of Fig. 4. As can be seen from Fig. 6B, the voltage across the primary winding 207 is 80 V, i.e. $V_{push}$ and $V_{pull}$ are each approximately 80 V during the portion of the cycle in which these are active. The hold-up charging voltage $V_{hold-up}$ applied to the hold-up capacitor C1 can be seen to be 160 V, i.e. double the voltage across the primary winding 207.

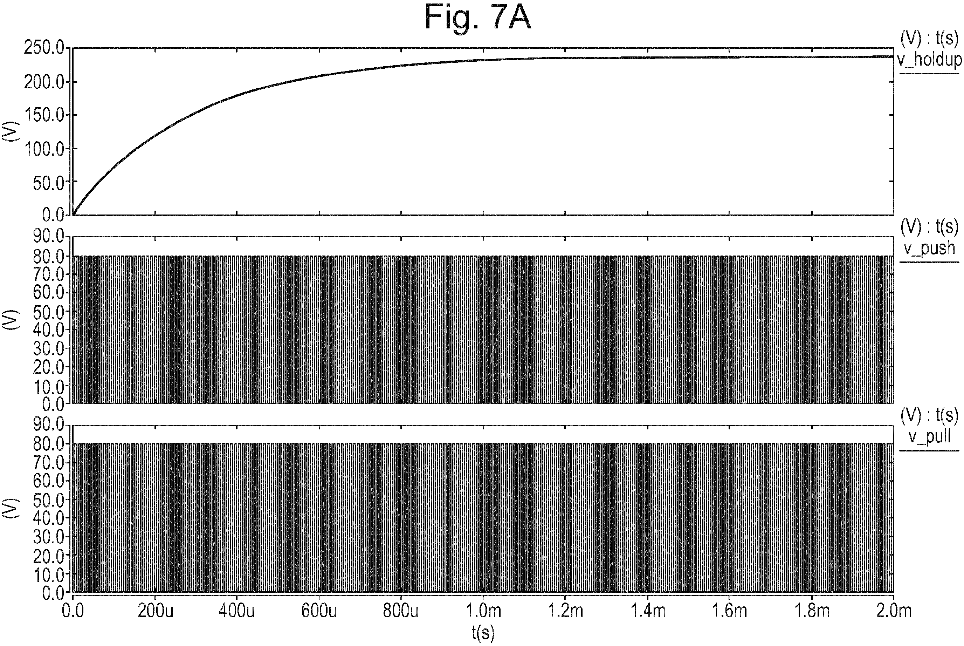

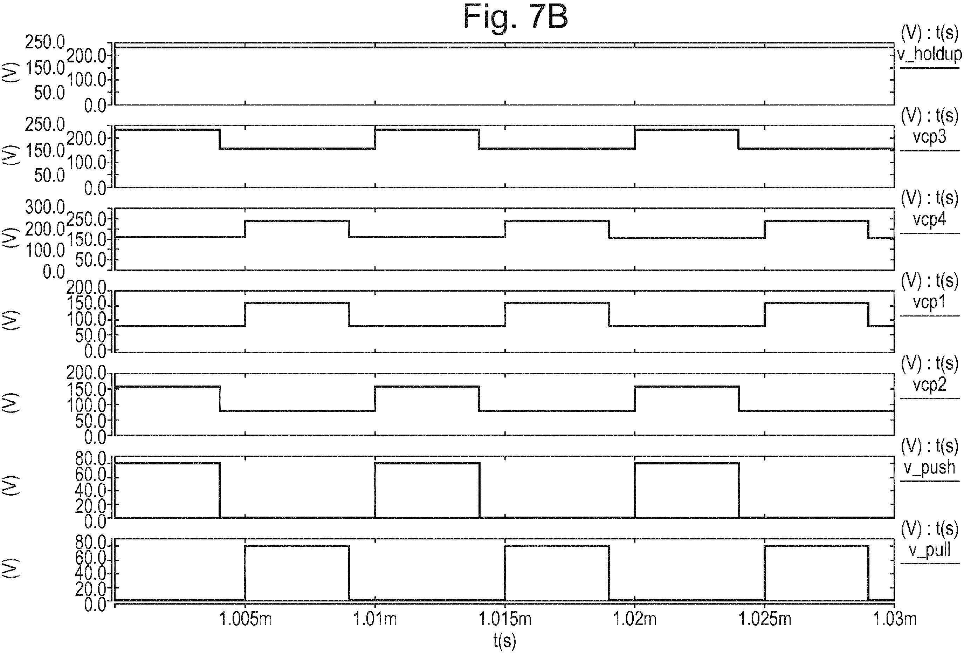

Similarly, Figs. 7A and 7B are graphs that show typical waveforms associated with the 3-level charge pump arrangement 212' of Fig. 5. The hold-up voltage $V_{hold-up}$ applied to the hold-up capacitor C1 is instead derived using the 3-level charge pump 212' of Fig. 5. As can be seen from Fig. 7B, the voltage across the primary winding 207 is 80 V, i.e. $V_{push}$ and $V_{pull}$ are each approximately 80 V during the portion of the cycle in which these are active. The hold-up charging voltage $V_{hold-up}$ applied to the hold-up capacitor C1 can be seen to be 240 V, i.e. double the voltage across the primary winding 207.

Fig. 8 is a graph that shows typical operation of the power supply circuit 200 of Figs. 2 and 3.

Between $t_0$ and $t_1$, both Q1 and Q2 are on, resulting in both Vpush and Vpull being grounded during duty cycle d (i.e. during the 'on-time' in which the PWM signals 218a, 218b overlap). During this time, D3, D4, D5 and D6 are reverse biased.

At $t_1$ and until $t_2$, Q1 remains on but Q2 is switched off. This causes $V_{boost}$ to rise to a level governed by T1 turns ratio and the regulation point (i.e. the set point target that the PWM controller 208 aims to drive the output voltage 204 toward). As a result, $V_{pull}$ rises to $2*V_{boost}$, i.e. $V_{pull}$ rises to 80 V (as $V_{boost}$ is 40V), thus forward biasing D4 and charging C4 to $2*V_{boost}$. During this time, the first charge pump voltage $V_{cp1}$ rises to $2*V_{pull}$. As $V_{push}$ is 0 V at this time, D3 is reverse biased.

At $t_2$, Q2 is switched back on, such that both switches Q1, Q2 are on simultaneously. This grounds both $V_{push}$ and $V_{pull}$ during duty cycle d, and D3, D4, D5 and D6 are once again reverse biased. Each of C3 and C4 have 80 V (i.e. $2*V_{boost}$) across their terminals, so both charge pump voltages $V_{cp1}$, $V_{cp2}$ are 80 V.

At $t_3$, Q1 is now switched off while Q2 remains on. Similarly to the process between $t_1$ and until $t_2$, $V_{boost}$ rises to a level governed by T1 turns ratio and the regulation point, however now $V_{push}$ (rather than $V_{pull}$) rises to $2*V_{boost}$ (i.e. $V_{push}$ rises to 80 V), forward biasing D3 and charging C3 to $2*V_{boost}$. During this time, the second charge pump voltage $V_{cp2}$ rises to $2*V_{push}$. As $V_{pull}$ is 0 V at this time, D4 is reverse biased.

This cycle repeats, effectively transferring energy stored on C3 and C4 to the hold-up capacitor C1 (via D5 or D6, and R1) over several switching cycles. The final stabilised holdup voltage is regulated by the magnitude of $V_{boost}$, which in turn is regulated by the converter output voltage.

Thus it will be appreciated that examples of the present disclosure provide an improved power supply circuit that can advantageously charge the energy storage device to a much higher regulated level without sacrificing main power converter device optimisation and provides a higher degree of freedom without adversely impacting converter efficiency, cost, weight, size and reliability. This may allow the use of non-electrolytic capacitors, thereby increasing the reliability of the device under low temperature and/or low pressure conditions.

While specific examples of the disclosure have been described in detail, it will be appreciated by those skilled in the art that the examples described in detail are not limiting on the scope of the disclosure.

## Claims

1. A power supply circuit comprising:

a push-pull portion comprising a transformer having a centre-tapped primary winding and a secondary winding, wherein a first terminal of the primary winding is connected to ground via a first switch, wherein a second terminal of the primary winding is connected to ground via a second switch, and wherein the push-pull portion is arranged to generate an output voltage across the secondary winding;
an inductor having a first terminal thereof connected to an input voltage, wherein a second terminal of the inductor is connected to a centre tap on the primary winding of the transformer such that a boost voltage is applied to said centre tap;
a charge pump having a first input terminal, a second input terminal, and an output terminal, wherein the first input terminal is connected to the first terminal of the primary winding, and wherein the second input terminal is connected to the second terminal of the primary winding, said charge pump being arranged to generate a charging voltage at its output terminal, said charging voltage being greater than the boost voltage; and
an energy storage portion connected to the output terminal of the charge pump, said energy storage portion being arranged to supply a hold-up voltage when the input voltage is below a threshold value.

2. The power supply circuit as claimed in claim 1, wherein the energy storage portion comprises a capacitor.

3. The power supply circuit as claimed in claim 2, wherein the capacitor comprises a non-electrolytic capacitor.

4. The power supply circuit as claimed in claim 2 or 3, wherein a first terminal of the capacitor is connected to the output terminal of the charge pump and a second terminal of the capacitor is connected to ground. In a set of such embodiments, the first terminal of the capacitor is connected to the first terminal of the inductor via a third switch.

5. The power supply circuit as claimed in any preceding claim, further comprising a controller arranged to monitor the input voltage, to apply a first pulse width modulated (PWM) signal to the first switch, and to apply a second PWM signal to the second switch, wherein said first and second PWM signals partially overlap.

6. The power supply circuit as claimed in claim 5, wherein the controller comprises a PWM generator arranged to produce the first and second PWM signals.

7. The power supply circuit as claimed in claim 5 or 6, further comprising an output voltage sense unit arranged to determine a magnitude of the output voltage and to supply said determined magnitude to the controller, wherein the controller compares the determined magnitude to a reference value and adjusts at least one of the first and second PWM signals based on a difference between the determined magnitude and the reference value.

8. The power supply circuit as claimed in any preceding claim, wherein the secondary winding is connected to an output portion comprising first and second output terminals, wherein a first terminal of the secondary winding is connected to the first output terminal via a first forward bias output diode, a second terminal of the secondary winding is connected to the first output terminal via a second forward bias output diode, and wherein the second output terminal is connected to a centre tap of the secondary winding.

9. The power supply circuit as claimed in claim 8, wherein a decoupling capacitor is connected between the first and second output terminals.

10. The power supply circuit as claimed in any preceding claim, wherein the charge pump comprises a charge leg comprising a capacitor, a first diode, and a second diode, wherein:

an anode of the first diode is connected to the first terminal or the second terminal of the primary winding;
an anode of the second diode is connected to a cathode of the first diode and to a first terminal of the capacitor; and
a second terminal of the capacitor is connected to the other of the first and second terminals of the primary winding.

11. The power supply circuit as claimed in any of claims 1 to 9, wherein the charge pump comprises a charge pump cell including a first charge leg and a second charge leg, wherein:

the first charge leg comprises a first capacitor, a first diode, and a second diode; and
the second charge leg comprises a second capacitor, a third diode, and a fourth diode;
wherein the charge pump cell is arranged such that:

an anode of the first diode is connected to the first terminal of the primary winding;
an anode of the second diode is connected to a cathode of the first diode and to a first terminal of the first capacitor;
a second terminal of the first capacitor is connected to the second terminal of the primary winding;
an anode of the third diode is connected to the second terminal of the primary winding;
an anode of the fourth diode is connected to a cathode of the third diode and to a first terminal of the second capacitor; and
a second terminal of the second capacitor is connected to the first terminal of the primary winding.

12. The power supply circuit as claimed in any of claims 1 to 9, wherein the charge pump comprises at least first and second charge pump cells each including a respective first charge leg and a second charge leg, the charge pump further comprising a first output diode and a second output diode, wherein each first charge leg comprises a first capacitor and a first diode, and each second charge leg comprises a second capacitor and a second diode;

wherein each charge pump cell is arranged such that:

a cathode of the first diode is connected to a first terminal of the first capacitor, and a cathode of the second diode is connected to a first terminal of the second capacitor;

a second terminal of the first capacitor is connected to an anode of the second diode, and a second terminal of the second capacitor is connected to an anode of the first diode;

wherein the charge pump is further arranged such that:

in a first charge pump cell, an anode of the first diode of said first charge pump cell is connected to the first terminal of the primary winding, and an anode of the second diode of said first charge pump cell is connected to the second terminal of the primary winding;

in a second charge pump cell, an anode of the first output diode is connected to the cathode of the first diode of said second charge pump cell, and an anode of the second output diode is connected to the cathode of the second diode of said second charge pump cell.

13. The power supply circuit as claimed in claim 12, wherein the charge pump comprises one or more further charge pump cells being arranged in a stack such that in each of said further charge pump cells, the anode of the first diode of the respective further charge pump cell is connected to the cathode of the respective first diode of a different charge pump cell, and the anode of the respective second diode of the further charge pump cell is connected to the cathode of the respective second diode of the different charge pump cell.

14. The power supply circuit as claimed in any preceding claim, wherein the input voltage is between 10 V and 50 V, optionally between 20 V and 40 V, optionally between 25 V and 30 V, and optionally is 28 V.

15. The power supply circuit as claimed in any preceding claim, wherein the output voltage is between 1 V and 10 V, optionally between 2 V and 8 V, and optionally is 3 V or 5 V or 18 V.

# Fig. 1

Prior art

# Fig. 2

Fig. 3

EP 3 772 806 A1

# Fig. 4

# Fig. 5

Fig. 6A

EP 3 772 806 A1

Fig. 6B

Fig. 7A

(V) : t(s)
v_holdup

(V) : t(s)
v_push

(V) : t(s)
v_pull

t(s)

# Fig. 7B

EP 3 772 806 A1

# Fig. 8

EP 3 772 806 A1

Europäisches
Patentamt

European
Patent Office

Office européen
des brevets

# EUROPEAN SEARCH REPORT

Application Number

EP 19 25 0007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 366 474 B1 (GUCYSKI JEFF [US]) 2 April 2002 (2002-04-02) * columns 7,8; figure 21 * * column 36 - column 37 * ----- | 1-15 | INV. H02M3/07 H02M3/337 H02M1/00 |
| X | US 2014/265594 A1 (VAN RUYMBEKE GILLES [US] ET AL) 18 September 2014 (2014-09-18) | 1-4 | |
| Y | * paragraph [0021] - paragraph [0026]; figures 3A,3B * ----- | 1-4 | |
| Y | PRUDENTE M ET AL: "Voltage Multiplier Cells Applied to Non-Isolated DC-DC Converters", IEEE TRANSACTIONS ON POWER ELECTRONICS, INSTITUTE OF ELECTRICAL AND ELECTRONICS ENGINEERS, USA, vol. 23, no. 2, 1 March 2008 (2008-03-01), pages 871-887, XP011205445, ISSN: 0885-8993 * page 878 - page 882; figures 23,25-38 * ----- | 1-15 | |

| | | |
|---|---|---|
| | | TECHNICAL FIELDS SEARCHED (IPC) |
| | | H02M |

The present search report has been drawn up for all claims

| Place of search | Date of completion of the search | Examiner |
|---|---|---|
| The Hague | 27 January 2020 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 25 0007

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2020

| Patent document cited in search report | | Publication date | Patent family member(s) | | Publication date |
|---|---|---|---|---|---|
| US 6366474 | B1 | 02-04-2002 | NONE | | |
| US 2014265594 | A1 | 18-09-2014 | EP<br>US | 2779360 A2<br>2014265594 A1 | 17-09-2014<br>18-09-2014 |

For more details about this annex : see Official Journal of the European Patent Office, No. 12/82